# EUROPÄISCHE PATENTSCHRIFT

(11) **EP 0 483 778 B1**
(45) Veröffentlichungstag und Bekanntmachung des Hinweises auf die Patenterteilung: **18.09.1996**
(21) Anmeldenummer: 91118456.2
(22) Anmeldetag: 29.10.1991
(51) Int. Cl.: H02K 21/14, H02K 1/27

(54) **Rotatorischer Elektromotor**
Rotating electric motor
Moteur électrique rotatif

(30) Priorität: 31.10.1990 DE 4034703
(43) Veröffentlichungstag der Anmeldung: 06.05.1992
(73) Patentinhaber: Magnet-Motor Gesellschaft für magnetmotorische Technik mbH, D-82319 Starnberg (DE)
(72) Erfinder: Heidelberg, Götz, W-8130 Starnberg-Percha (DE); Gründl, Andreas, Dr., W-8000 München 70 (DE); Ehrhart, Peter, Dr., W-8000 München 70 (DE)
(74) Vertreter: Klunker . Schmitt-Nilson . Hirsch

(56) Entgegenhaltungen:
- CH-A- 640 089
- DE-U- 1 930 868
- FR-A- 1 198 011
- FR-A- 2 536 603
- IEE PROCEEDINGS B. ELECTRICAL POWER APPLICATIONS Bd. 130, Nr. 6, November 1983, Stevenage GB, Seiten 407-414; Prof. K.J. BINNS et al.: "Performance and application of multi-stacked imbricated permanent magnet generators"
- DESIGN ENGINEERING Januar 1977, London GB, Seite 5; "High specific output permanent magnet motor"
- IEEE TRANSACTIONS ON INDUSTRY APPLICATIONS 2. Oktober 1988, New York US, Seiten 15-19; M.A. JABBAR et al.: "Permanent magnet motors for brushless operation"

## Beschreibung

Gegenstand der Erfindung ist ein rotatorischer Elektromotor oder Generator mit dauermagnetischer Erregung, aufweisend folgende Merkmale:
(a) einen Stator mit Spulen;
(b) einen Rotor mit einer dauermagnetischen Erregungseinrichtung und einer an die Erregungseinrichtung anschließenden Flußleiteinrichtung;
(c) die Erregungseinrichtung hat eine im wesentlichen scheibenförmige Konfiguration mit axialer Dauermagnetisierungsrichtung;
(d) die Flußleiteinrichtung weist einen ersten Teil, der an der ersten Axialseite der scheibenförmigen Erregungseinrichtung anschließt und an seinem dem Stator zugewandten Umfang eine Reihe umfangsmäßiger beabstandeter, erster Rotorpolflächen bildet, sowie einen zweiten Teil auf, der an der gegenüberliegenden zweiten Axialseite der scheibenförmigen Erregereinrichtung anschließt und an seinem dem Stator zugewandten Umfang eine Reihe umfangsmäßig beabstandeter, zweiter Rotorpolflächen bildet;
(e) wobei längs des dem Stator zugewandten Umfangs des Rotors erste Rotorpolflächen und zweite Rotorpolflächen miteinander abwechseln;
(f) und einen im wesentlichen zylindrischen Luftspalt zwischen Magnetfluß-Übertrittsflächen des Stators und Polflächen (24) der Flußleiteinrichtung des Rotors,
dadurch gekennzeichnet,
(g) daß der erste Teil und der zweite Teil der Flußleiteinrichtung
(g1) aus kunststoffgebundenem Eisenpulvermaterial bestehen
(g2) und in dem der Erregungseinrichtung entsprechenden Durchmesserbereich jeweils eine mit zunehmendem Durchmesser zunehmende axiale Dicke haben.

Ein rotatorischer Generator mit dauermagnetischer Erregung, aufweisend die Merkmale (a) bis (f) ist aus dem Dokument DE-U-1 930 868 bekannt.

Der erfindungsgemäße Elektromotor oder Generator läßt sich besonders kompakt bauen und kostengünstig herstellen. Ferner ist sein einfacher Zusammenbau bei der Herstellung bemerkenswert.

Im einfachsten und bevorzugten Fall besteht die Erregungseinrichtung im wesentlichen aus einer Dauermagnetscheibe, in der Regel mit einer zentralen Öffnung. Es ist jedoch möglich, die Erregungseinrichtung mit mehreren Dauermagneten aufzubauen, insbesondere mehreren axial aneinandergesetzten Dauermagnetscheiben oder mehreren, beispielsweise sektorförmigen, umfangsmäßig aneinandergesetzten Dauermagneten. Ferner ist es möglich, mehrere Erregungseinrichtungen im wesentlichen scheibenförmiger Konfiguration axial nebeneinander jeweils mit eigener Flußleiteinrichtung vorzusehen. Im letztgenannten Fall sind vorzugsweise die Magnetfluß-Übertrittsflächen des Stators - in Axialrichtung gemessen - so breit, daß daß sie die Rotorpolflächen aller derart gebildeten Teilrotoren überdecken. Man kann aber alternativ auch axial nebeneinander so viele Magnetfluß-Übertrittsflächen des Stators vorsehen wie Erregungseinrichtungen vorhanden sind, und zwar entweder jeweils mit einzeln zugeordneter Spule oder mit gemeinsamer Spule. Schließlich ist es möglich, die axial benachbarten Umfangsreihen der Rotorpolfächen gegeneinander in Umfangsrichtung verdreht auszuführen. Das Gleiche ist bei den Magnetfluß-Übertrittsflächen des Stators möglich. Die geschilderte Aufteilung auf Teilrotoren ist magnetisch günstiger als nur eine, entsprechend axial dickere Erregungseinrichtung und eine Flußleiteinrichtung mit entsprechend größeren Flußleitquerschnitten. Die Flußleiteinrichtung hat im Bereich der Rotorpolflächen vorzugsweise eine klauenpolartige Konfiguration.

Die Flußleiteinrichtung kann derart gestaltet sein, daß die Reihe der zweiten Rotorpolflächen axial (dicht) neben der Reihe der ersten Rotorpolflächen liegt. Dabei sind die Magnetfluß-Übertrittsflächen des Stators sinnvollerweise - in Axialrichtung gemessen - so breit, daß sie sowohl die ersten als auch die zweiten Rotorpolflächen überdecken.

Eine bessere volumenmäßige und magnetische Ausnutzung erhält der Elektromotor jedoch, wenn der erste Teil und der zweite Teil der Flußleiteinrichtung im Bereich der ersten und zweiten Rotorpolflächen kammartig ineinandergreifen, wobei dieses Ineinandergreifen nur für einen Teil der - in Axialrichtung gemessenen - Breite der Rotorpolflächen vorhanden sein kann oder, wie besonders bevorzugt, ein vollständiges Ineinandergreifen ist, so daß die ersten und die zweiten Rotorpolflächen eine gemeinsame, fluchtende Reihe von Rotorpolflächen bilden. Es versteht sich, daß zwischen in Umfangsrichtung benachbarten Rotorpolflächen magnetisch nichtleitende Spalte vorhanden sind.

Im Interesse einer besonders einfachen Herstellbarkeit ist bevorzugt, daß der erste Teil und der zweite Teil der Flußleiteinrichtung im wesentlichen identisch gestaltet sind, so daß man mit zwei identischen Flußleit-Bauteilen den Motor aufbauen kann.

Vorzugsweise sind die ersten und die zweiten Rotorpolflächen - in Axialrichtung gemessen - breiter als die im wesentlichen scheibenförmige Erregungseinrichtung.

Die optimale Materialausnutzung der Flußleiteinrichtung ergibt sich, wenn bei ihrem ersten Teil und ihrem zweiten Teil jeweils der Flußleitquerschnitt von dem Außenumfang der Erregungseinrichtung bis zu einer betrachteten Rotorpolfläche mindestens grob näherungsweise konstant ist. Ein Streben nach weitgehend exakter Konstanz des Flußleitquerschnitts ist dabei normalerweise nicht lohnend; Gesichtspunkte komplizierter Herstellbarkeit der Flußleiteinrichtung sollten ebenfalls beachtet werden.

Unter dem Gesichtspunkt der Reduzierung magnetischer Streuflüsse und dennoch der Vermeidung von Einengungen des Flußleitquerschnitts der Flußleiteinrichtung ist es bevorzugt, daß bei dem ersten Teil und dem zweiten Teil der Flußleiteinrichtung die den Rotorpolflächen benachbarten Bereiche jeweils eine von außen nach innen abnehmende Abmessung in Umfangsrichtung und im Vergleich zu der betreffenden Rotorpolfläche eine vergrößerte Abmessung in Axialrichtung haben. Ein typischer Fall ist dabei eine - in Axialrichtung betrachtet - grob gesprochen trapezförmige Gestalt der den Rotorpolflächen benachbarten Bereiche, wobei die kürzere Trapezgrundlinie radial innen ist. Insgesamt soll dafür gesorgt werden, daß die - normalerweise in Axialrichtung verlaufenden - Spalte zwischen benachbarten Rotorpolflächen bzw. den daran radial nach innen anschließenden Bereichen von außen nach innen - in Umfangsrichtung gemessen - zunehmend breiter werden.

Optimale magnetische Verhältnisse ergeben sich, wenn die Rotorpolflächen - in Umfangsrichtung gemessen - jeweils im wesentlichen die gleiche Abmessung haben wie die Magnetfluß-Übertrittsflächen des Stators.

Es ist besonders bevorzugt, wenn nicht nur der erste Teil der Flußleiteinrichtung und der zweite Teil der Flußleiteinrichtung, sondern auch der flußleitende Bestandteil des Stators aus kunststoffgebundenem Eisenpulvermaterial (statt aus geblechtem Eisenmaterial) bestehen. Dabei ist ferner besonders bevorzugt, wenn die genannten Bauteile jeweils einstückige Bauteile sind. Diese Bauteile können formgepreßt sein. Die beiden Teile der Flußleiteinrichtung können bei der Herstellung mit dem Magnet oder den Magneten der Erregungseinrichtung durch Anformen quasi-integral hergestellt und verbunden sein. Man kann jedoch die beiden Teile der Flußleiteinrichtung auch auf andere Weise mit dem Magnet bzw. den Magneten der Erregungseinrichtung vereinigen bzw. verbinden.

Vorzugsweise ist die Erregungseinrichtung mit hochkoerzitivem Dauermagnetmaterial aufgebaut. Dieses Dauermagnetmaterial kann eine relative Permeabilität nahe derjenigen von Luft aufweisen. Günstige Materialien sind solche auf der Basis von Seltenerden-Kobalt oder Seltenerden-Eisen, insbesondere Samarium-Kobalt und Eisen-Neodym.

Der Stator ist entweder konventionell mit auf magnetisch leitenden Spulenkernen angebrachten Spulen oder vorzugsweise mit am Stator angebrachten Luftspulen ohne magnetisch leitenden Kern aufgebaut. Wegen der letztgenannten Möglichkeit wurde der Begriff "Magnetfluß-Übertrittsflächen des Stators" benutzt statt des gängigeren Begriffs "Statorpolflächen", der allerdings bei Luftspulen nicht ganz treffend ist.

Vorzugsweise ist der erfindungsgemäße Motor elektronisch kommutiert. Es ist günstig, wenn die Zahl der Magnetfluß-Übertrittsflächen des Stators durch 3 teilbar ist, so daß der Stator für dreiphasige Bewicklung geeignet ist. Ferner ist es günstig, wenn die Zahl der Rotorpolflächen ungleich der Zahl der Magnetfluß-Übertrittsflächen des Stators ist, insbesondere wenn wenige Rotorpolflächen mehr oder weniger als Magnetfluß-Übertrittsflächen des Stators vorhanden sind.

Vorzugsweise sind die Statorspulen Einzelspulen, die einzeln oder gruppenweise verschaltet oder alle gemeinsam verschaltet an die Stromversorgung angeschlossen sind. Der Begriff "Stromversorgung" bedeutet nicht zwingend einen äußeren Versorgungsstromkreis, sondern beispielsweise im Fall des elektronisch kommutierten Motors einen Anschluß an den Leistungsteil der elektronischen Kommutierungseinrichtung.

Der erfindungsgemäße Elektromotor kann so ausgebildet sein, daß am Stator bewickelte und unbewickelte Statorpole in Umfangsrichtung miteinander abwechseln (wobei der Begriff "bewickelte Statorpole" auch Luftspulen einschließen soll). Dies reduziert die magnetischen Wechselwirkungen zwischen benachbarten Statorpolen, die zu unterschiedlichen Zeiten in ihrer Stromrichtung umgeschaltet werden. In den meisten Fällen bestehen die unbewickelten Statorpole aus zwei Halbpolen. Diese können magnetflußmäßig voneinander getrennt sein.

Vorzugsweise ist der Rotor nach dem Flußkonzentrationsprinzip aufgebaut, bei dem eine betrachtete Rotorpolfläche kleiner ist als der auf sie entfallende Teil der Übergangsfläche zwischen der Erregungseinrichtung und der Flußleiteinrichtung.

Die Erregungseinrichtung und die Flußleiteinrichtung können an einer zentralen, magnetisch nichtleitenden Büchse oder Welle befestigt sein. Die Büchse oder Welle kann die Erregungseinrichtung und die Flußleiteinrichtung zusammenhalten oder dieses Zusammenhalten unterstützen. Die Büchse oder Welle kann quasi-integral angeformt sein. Die genannten Ausführungsmöglichkeiten ergeben eine besonders einfache Herstellung und Herstellungsmontage des Motors.

Es wird darauf hingewiesen, daß zum Bereich der Erfindung auch ein Stromgenerator gehört, der mit den vorstehend beschriebenen Merkmalen aufgebaut ist. Ferner kann der Rotor entweder ein Innenrotor sein, dessen Rotorpolflächen nach außen dem Stator zugewandt sind, oder ein Außenrotor, dessen Rotorpolflächen nach innen dem Stator zugewandt sind.

Die Erfindung und Ausgestaltungen der Erfindung werden nachfolgend anhand von zeichnerisch dargestellten Ausführungsbeispielen noch näher erläutert. Es zeigt:
- Fig. 1: die obere Hälfte eines Elektromotors im Längsschnitt durch seine Rotationsachse;
- Fig. 2: den Motor von Fig. 1 im Querschnitt längs II-II in Fig. 1;
- Fig. 3: die obere Hälfte eines abgewandelten Elektromotors im Längsschnitt durch seine Rotationsachse.

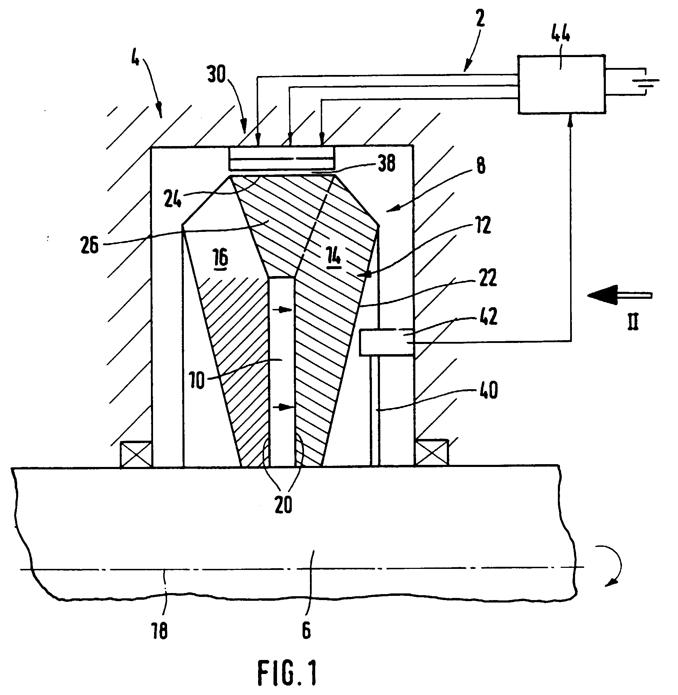

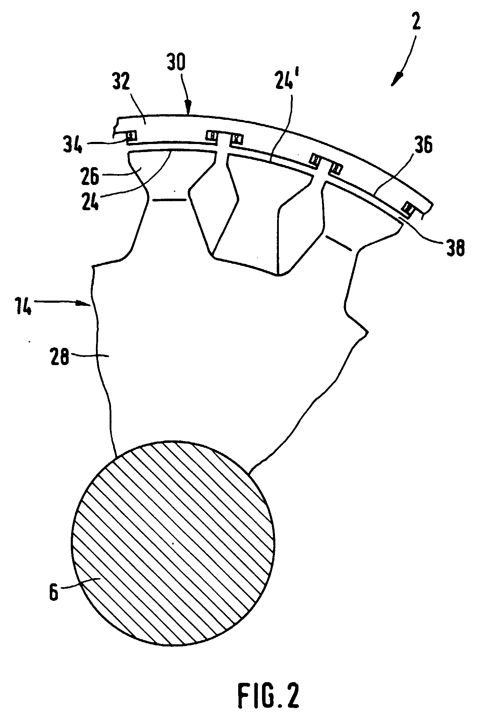

Der Elektromotor 2 von Fig. 1 und 2 weist ein schematisiert mit Schrägstrichen angedeutetes Gehäuse 4 und einen darin mittels einer Welle 6 drehbar gelagerten Rotor 8 auf.

Der Rotor 8 besteht im wesentlichen aus einer drehfest auf der Welle 6 angebrachten Dauermagnetscheibe 10 als Erregungseinrichtung und einer drehfest auf der Welle 6 und/oder an der Dauermagnetscheibe 10 befestigten Flußleiteinrichtung 12. Die Flußleiteinrichtung 12 besteht aus einem ersten Teil 14, der sich in Fig. 1 teils rechts von der Dauermagnetscheibe 10 und teils im Bereich radial außerhalb der Dauermagnetscheibe 10 befindet, und einem zweiten Teil 16, der sich in Fig. 1 teils links von der Dauermagnetscheibe 10 und teils radial außerhalb der Dauermagnetscheibe 10 befindet. Die Dauermagnetscheibe 10 ist axial magnetisiert, so daß sich beispielsweise an ihrer in Fig. 1 rechten Stirnseite ein kreisringförmiger Nordpol und an ihrer in Fig. 1 linken Stirnseite ein kreisringförmiger Südpol befindet. Die Dauermagnetscheibe 10 ist rechtwinklig zur Drehachse 18 der Welle 6 orientiert. Die kreisringförmigen Übergangsflächen zwischen der Dauermagnetscheibe 10 und dem ersten Teil 14 sowie dem zweiten Teil 16 der Flußleiteinrichtung 12 sind mit 20 bezeichnet. Der erste Teil 14 und der zweite Teil 16 der Flußleiteinrichtung 12 sind untereinander identische Teile, die aus kunststoffgebundenem Eisenpulvermaterial bestehen.

Im Längsschnitt der Fig. 1 sind die Teile 14, 16 der Flußleiteinrichtung 12 - grob gesprochen - L-förmig. Die jeweilige außenstirnseitige Oberfläche 22 der Flußleiteinrichtung verläuft, wenn man von radial innen nach radial außen fortschreitet, nach axial-außen. Dann knickt diese Oberfläche 22 ein erstes Mal nach axial-innen ab und knickt dann ein zweites Mal so ab, daß sich ein axial verlaufender Bereich ergibt. Dieser Bereich bildet eine Rotorpolfläche 24. Die Rotorpolfläche 24 liegt symmetrisch zu einer Symmetrieebene, die rechtwinklig zur Achse 18 durch die Mitte der Dauermagnetscheibe 10 verläuft. Der der betrachteten Rotorpolfläche 24 radial innen benachbarte Bereich 26 führt bis zur Umfangsoberfläche der Dauermagnetscheibe 10. Die betrachtete Rotorpolfläche 24 ist - in Axialrichtung gemessen - breiter als die Dauermagnetscheibe 10. Der in Fig. 1 rechte, erste Teil 14 der Flußleiteinrichtung 12 ist in einer ersten Richtung schraffiert, weil er insgesamt geschnitten ist. Der in Fig. 1 linke, zweite Teil 16 der Flußleiteinrichtung 12 ist etwa bis zu der dem Außendurchmesser der Dauermagnetscheibe 10 entsprechenden Durchmesser in einer zweiten Richtung schraffiert und radial außerhalb davon unschraffiert, weil dessen dortiger Bereich nicht mehr geschnitten ist und sich hinter der Zeichenebene der Fig. 1 befindet.

In der axialen Rotoransicht der Fig. 2 erkennt man, daß die Bereiche 26 der Flußleiteinrichtung 12 - in Axialrichtung betrachtet - sich, wenn man von radial außen nach radial innen fortschreitet, (in Umfangsrichtung gemessen) zunächst verschmälern. Andererseits nimmt gerade in diesem Bereich die Axialabmessung durch einseitige Vergrößerung zu (Fig. 1). In Fig. 2 erkennt man ferner, daß die Flußleiteinrichtung 12 pro Rotorpol radial innerhalb des geschilderten, trapezförmigen Verschmälerungsbereichs 26 weiter nach radial innen führt und dann in einen scheibenförmigen Bereich 28 übergeht, der pro Teil 14 bzw. 16 der Flußleiteinrichtung 12 sämtliche Pole miteinander verbindet. Alternativ kann man die Bereiche 26 insgesamt, d.h. im wesentlichen bis zum Außenumfang der Dauermaganetscheibe 10, sich (in Umfangsrichtung gemessen) durchgehend verschmälern lassen.

Insgesamt ist bei beiden Teilen 14 bzw. 16 der Flußleiteinrichtung 12 die Auslegung so, daß pro Rotorpol 24 der Flußleitquerschnitt vom Außenumfang der Dauermagnetscheibe 10 bis zu der betreffenden Rotorpolfläche 24 grob näherungsweise konstant ist. Im wesentlichen ist lediglich am Übergang von dem scheibenförmigen Bereich 28 in die einzelnen Polbereiche und im radial inneren Bereich der Flußleiteinrichtung 12 sozusagen zu viel kunststoffgebundenes Eisenpulvermaterial aus herstellungstechnischen und festigkeitsmäßigen Gründen vorhanden. Andererseits ist jedoch beispielsweise die in Fig. 1 rechte Magnetfluß-Austrittsfläche der Dauermagnetscheibe 10 größer als die Summe der zugehörigen Rotorpolflächen 24, so daß der Motor 2 am Rotor 8 nach dem Flußkonzentrationsprinzip aufgebaut ist.

An der inneren Umfangsfläche des Gehäuses 4 ist ein Stator 30 aus kunststoffgebundenem Eisenpulvermaterial befestigt. Der Stator 30 weist eine Reihe von umfangsmäßig beabstandeten Statorzähnen 32 (Fig. 2) auf, und auf jedem Statorzahn oder jedem zweiten Statorzahn ist eine Spule 34 (Fig. 2) angebracht. Statt der Statorzähne 32 jeweils mit darauf angebrachter Spule 34 können auch Luftspulen ohne Eisenkern vorgesehen sein, die an einem innenseitig im wesentlichen glatt-zylindrischen Statorteil befestigt sind, welches die Funktion des magnetischen Rückschlusses zwischen benachbarten Statorpolen übernimmt.

Die Rotorpolflächen 24, die dem ersten Teil 14 der Flußleiteinrichtung 12 angehören, und die Rotorpolflächen 24', die dem zweiten Teil 16 der Flußleiteinrichtung 12 angehören, greifen - wie in Fig. 1 erkennbar - kammartig ineinander, so daß die Rotorpolflächen 24 und 24' eine gemeinsame, fluchtende Reihe von Rotorpolflächen abwechselnder Polarität bilden. In Fig. 2 erkennt man ferner, daß die Rotorpolflächen 24 bzw. 24' und die Magnetfluß-Übertrittsflächen 36 bzw. Polflächen 36 des Stators 30 - jeweils in Umfangsrichtung gemessen - im wesentlichen gleiche Abmessungen haben. Zwischen den Rotorpolflächen 24 bzw. 24' und den Statorpolflächen 36 bzw. Magnetfluß-Übertrittsflächen des Stators 30 befindet sich ein im wesentlichen zylindrischer Luftspalt 38 mit einer radialen Dicke, die vorzugsweise im Bereich von 0,1 bis 0,6 mm beträgt. Der Motor 2 hat beispielsweise 12 Magnetfluß-Übertrittsflächen 36 des Stators 30 und 16 Rotorpolflächen 24 bzw. 24', so daß die Spulenbewicklung des Stators 30 dreiphasig ausgeführt sein kann und die Zahl der Rotorpolflächen 24 bzw. 24' etwas größer (oder auch etwas kleiner) als die Zahl der Magnetfluß-Übertrittsflächen 36 ist. Deshalb sind die Rotorpolflächen 24 und 24' streng genommen in Umfangsrichtung etwas kürzer als die Magnetfluß-Übertrittsflächen 36, was in Fig. 2 bewußt nicht eingezeichnet ist.

Der Motor 2 ist elektronisch kommutiert. Zu diesem Zweck weist der Rotor 8 an einer Axialseite neben dem ersten Teil 14 der Flußleiteinrichtung 12 eine Geberscheibe 40 auf, die an ihrem Außenumfang mit nicht zeichnerisch veranschaulichten, radial nach außen weisenden Zähnen versehen ist. Eine innen am Gehäuse 4 befestigte Sensoreinrichtung 42, beispielsweise ein Hall-Sensor oder mehrere, kann aufgrund der Zähne der Geberscheibe 40 die jeweilige momentane Drehstellung des Rotors 8 detektieren. Das Signal der Sensoreinrichtung 42 wird einer elektronischen Kommutierungseinrichtung 44 zugeführt. Der Leistungsteil der elektronischen Kommutierungseinrichtung 44 versorgt die einzelnen Spulen 34 jeweils zeit- und vorzeichenrichtig mit Strom. Der Leistungsteil der elektronischen Kommutierungseinrichtung 44 wird entweder von einer Gleichstromquelle versorgt oder von einer Wechselstromquelle, wobei in der Kommutierungseinrichtung 44 ein Gleichspannungszwischenkreis besteht. Der Hauptbestandteil der Kommutierungseinrichtung 44 sind mehrere Zweiquadrantensteller oder Vierquadrantensteller. Beim beschriebenen Ausführungsbeispiel sind jeweils vier Spulen 34 miteinander verschaltet und dann gemeinsam an die Kommutierungseinrichtung 44 angeschlossen. Elektronisch kommutierte Elektromotoren sind an sich bekannt, so daß hier keine weiteren Einzelheiten der elektronischen Kommutierung beschrieben werden müssen. Alternativ ist es möglich, jede Spule 34 einzeln an die Kommutierungseinrichtung 44 anzuschließen oder sämtliche Spulen 34 miteinander zu verschalten und gemeinsam an die Kommutierungseinrichtung 44 anzuschließen.

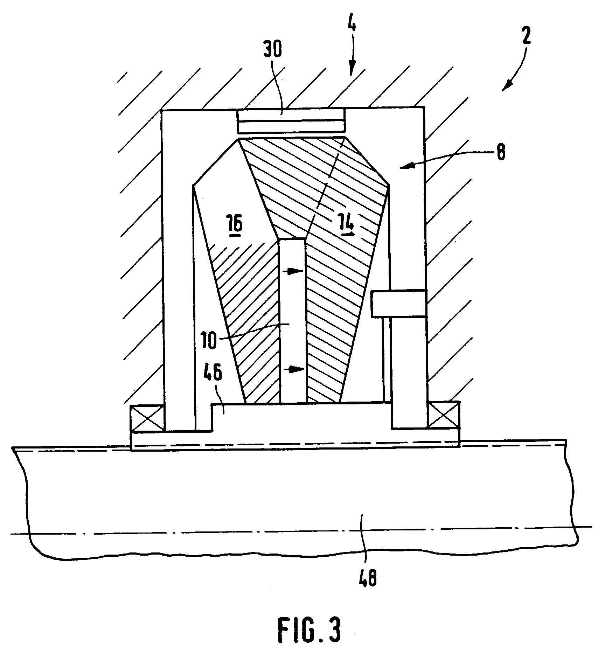

Der Motor 2 gemäß Fig. 3 unterscheidet sich von dem Motor 2 gemäß Fig. 1 und 2 lediglich dadurch, daß die Dauermagnetscheibe 10 und die Flußleiteinrichtung 12 und die Geberscheibe 40 nicht auf einer Welle 6 befestigt sind, sondern auf einer hohlzylindrischen Büchse 46 aus magnetisch nichtleitendem Material, beispielsweise Kunststoffmaterial. Die Büchse 46 ist im Gehäuse 4 drehbar gelagert und mit einem Innengewinde versehen. Dieses Innengewinde ist in Eingriff mit einem Außengewinde einer drehfest gehaltenen Spindel 48, die durch das Gehäuse 4 geführt ist. Bei Rotation des Rotors 8 wird somit der Spindel 48 eine Linearbewegung erteilt.

Die vorstehend beschriebenen Motoren hatten einen Innenläufer 8 mit radial nach außen weisenden Rotorpolflächen 24 und 24', der innerhalb des ringförmig umgebenden Stators 30 angeordnet war. Es wird darauf hingewiesen, daß Motoren gemäß der Erfindung auch mit Außenrotor gebaut werden können, dessen Rotorpolflächen radial nach innen weisen, wobei der Stator innerhalb des umgebenden Rotors angeordnet ist.

## Patentansprüche

1. Rotatorischer Elektromotor (2) oder Generator mit dauermagnetischer Erregung, aufweisend folgende Merkmale:
(a) einen Stator (30) mit Spulen (34);
(b) einen Rotor (8) mit einer dauermagnetischen Erregungseinrichtung und einer an die Erregungseinrichtung anschließenden Flußleiteinrichtung (12);
(c) die Erregungseinrichtung (12) hat eine im wesentlichen scheibenförmige Konfiguration mit axialer Dauermagnetisierungsrichtung;
(d) die Flußleiteinrichtung weist einen ersten Teil (14), der an der ersten Axialseite der scheibenförmigen Erregungseinrichtung (10) anschließt und an seinem dem Stator (30) zugewandten Umfang eine Reihe umfangsmäßiger beabstandeter, erster Rotorpolflächen (24) bildet, sowie einen zweiten Teil (16) auf, der an der gegenüberliegenden zweiten Axialseite der scheibenförmigen Erregereinrichtung (10) anschließt und an seinem dein Stator (30) zugewandten Umfang eine Reihe umfangsmäßig beabstandeter, zweiter Rotorpolflächen (24') bildet;
(e) wobei längs des dem Stator zugewandten Umfangs des Rotors (8) erste Rotorpolflächen (24) und zweite Rotorpolflächen (24') miteinander abwechseln;
(f) und einen im wesentlichen zylindrischen Luftspalt (38) zwischen Magnetfluß-Übertrittsflächen (36) des Stators (30) und Polflächen (24) der Flußleiteinrichtung (12) des Rotors (8),
**dadurch gekennzeichnet,**
(g) daß der erste Teil (14) und der zweite Teil (16) der Flußleiteinrichtung
(g1) aus kunststoffgebundenem Eisenpulvermaterial bestehen
(g2) und in dem der Erregungseinrichtung (10) entsprechenden Durchmesserbereich jeweils eine mit zunehmendem Durchmesser zunehmende axiale Dicke haben.

2. Elektromotor oder Generator nach Anspruch 1,
dadurch gekennzeichnet, daß der erste Teil (14) und der zweite Teil (16) der Flußleiteinrichtung im Bereich der ersten und zweiten Rotorpolflächen (24,24') kammartig ineinandergreifen.

3. Elektromotor oder Generator nach Anspruch 1 oder 2,
dadurch gekennzeichnet, daß der erste Teil (14) der Flußleiteinrichtung und der zweite Teil (16) der Flußleiteinrichtung im wesentlichen identisch gestaltet sind.

4. Elektromotor oder Generator nach einem der Ansprüche 1 bis 3,
dadurch gekennzeichnet, daß die ersten und die zweiten Rotorpolflächen (24,24') - in Axialrichtung gemessen - breiter sind als die Erregungseinrichtung (10).

5. Elektromotor oder Generator nach einem der Ansprüche 1 bis 4,
dadurch gekennzeichnet, daß bei dem ersten Teil (14) und dem zweiten Teil (16) der Flußleiteinrichtung jeweils der Flußleitquerschnitt von dem Umfang der Erregungseinrichtung (10) bis zu einer Rotorpolfläche (24,24') mindestens grob näherungsweise konstant ist.

6. Elektromotor oder Generator nach einem der Ansprüche 1 bis 5,
dadurch gekennzeichnet, daß bei dem ersten Teil (14) und dem zweiten Teil (16) der Flußleiteinrichtung die den Rotorpolflächen (24,24') benachbarten Bereiche jeweils eine von außen nach innen abnehmende Abmessung in Umfangsrichtung und im Vergleich zu der betreffenden Rotorpolfläche (24,24') eine vergrößerte Abmessung in Axialrichtung haben.

7. Elektromotor oder Generator nach einem der Ansprüche 1 bis 6,
dadurch gekennzeichnet, daß die Rotorpolflächen (24,24') - in Umfangsrichtung gemessen - jeweils im wesentlichen die gleiche Abmessung haben wie die Magnetfluß-Übertrittsflächen (36) des Stators (30).

8. Elektromotor oder Generator nach einem der Ansprüche 1 bis 7,
dadurch gekennzeichnet, daß der Rotor (8) in mehrere Teilrotoren jeweils mit einer dauermagnetischen Erregungseinrichtung und einer zweiteiligen Flußleiteinrichtung unterteilt ist.

9. Elektromotor oder Generator nach einem der Ansprüche 1 bis 8,
dadurch gekennzeichnet, daß der flußleitende Bestandteil des Stators (30) aus kunststoffgebundenem Eisenpulvermaterial besteht.

10. Elektromotor oder Generator nach einem der Ansprüche 1 bis 9,
dadurch gekennzeichnet, daß der erste Teil (14) der Flußleiteinrichtung und/oder der zweite Teil (16) der Flußleiteinrichtung und/oder der flußleitende Bestandteil des Stators (30) jeweils einstückige Bestandteile sind.

11. Elektromotor oder Generator nach einem der Ansprüche 1 bis 10,
dadurch gekennzeichnet, daß die Erregungseinrichtung (10) mit hochkoerzitivem Dauermagnetmaterial aufgebaut ist, das eine relative Permeabilität nahe derjenigen von Luft aufweist.

12. Elektromotor oder Generator nach einem der Ansprüche 1 bis 11,
dadurch gekennzeichnet, daß der Stator (30) mit Luftspulen aufgebaut ist.

13. Elektromotor oder Generator nach einem der Ansprüche 1 bis 12,
gekennzeichnet durch eine elektronische Kommutierungseinrichtung (44).

14. Elektromotor oder Generator nach einem der Ansprüche 1 bis 13,
dadurch gekennzeichnet, daß die Zahl der Magnetfluß-Übertrittsflächen (36) des Stators (30) durch 3 teilbar ist, so daß der Stator (30) für dreiphasige Bewicklung geeignet ist.

15. Elektromotor oder Generator nach einem der Ansprüche 1 bis 14,
dadurch gekennzeichnet, daß die Zahl der Rotorpolflächen (24,24') ungleich der Zahl der Magnetfluß-Übertrittsflächen (36) des Stators (30) ist.

16. Elektromotor oder Generator nach einem der Ansprüche 1 bis 15,
dadurch gekennzeichnet, daß die Spulen (34) des Stators Einzelspulen sind, die einzeln oder gruppenweise verschaltet oder alle gemeinsam verschaltet an die Stromversorgung angeschlossen sind.

17. Elektromotor oder Generator nach einem der Ansprüche 1 bis 16,
dadurch gekennzeichnet, daß am Stator (30) bewickelte und unbewickelte Statorpole in Umfangsrichtung miteinander abwechseln.

18. Elektromotor oder Generator nach einem der Ansprüche 1 bis 17,
dadurch gekennzeichnet, daß der Rotor (8) nach dem Flußkonzentrationsprinzip aufgebaut ist, bei dem eine betrachtete Rotorpolfläche (24,24') kleiner ist als der auf sie entfallende Teil der Übergangsfläche (20) zwischen der Erregungseinrichtung (10) und der Flußleiteinrichtung (12).

19. Elektromotor oder Generator nach einem der Ansprüche 1 bis 18,
dadurch gekennzeichnet, daß die Erregungseinrichtung (10) und die Flußleiteinrichtung (12) an einer zentralen, magnetisch nichtleitenden Büchse (46) oder Welle (6) befestigt sind.

## Claims

1. A rotary electric motor (2) or generator with permanent-magnetic excitation, comprising the following features:
(a) a stator (30) having coils (34);
(b) a rotor (8) having a permanent-magnetic excitation means and a flux conduction means (12) adjoining the excitation means;
(c) the excitation means (12) has a substantially disc-shaped configuration with axial direction of permanent magnetization;
(d) the flux conduction means has a first part (14) adjoining the first axial side of the disc-shaped excitation means (10) and forming a series of circumferentially spaced first rotor pole areas (24) on its circumference facing the stator (30), as well as a second part (16) adjoining the opposite, second axial side of the disc-shaped excitation means (10) and forming a series of circumferentially spaced second rotor pole areas (24') on its circumference facing the stator (30);
(e) with first rotor pole areas (24) and second rotor pole areas (24') alternating along the circumference of the rotor (8) facing the stator;
(f) and a substantially cylindrical air gap (38) between magnetic flux transition areas (36) of the stator (30) and pole areas (24) of the flux conduction means (12) of the rotor (8),
characterized in
(g) that the first part (14) and the second part (16) of the flux conduction means
(g1) consist of plastics-bonded iron powder material
(g2) and, in the diameter portion corresponding to the excitation means (10), each have an axial thickness increasing with increasing diameter.

2. An electric motor or generator according to claim 1,
characterized in that the first part (14) and the second part (16) of the flux conduction means interengage in comb-like fashion in the region of the first and second rotor pole areas (24, 24').

3. An electric motor or generator according to claim 1 or 2,
characterized in that the first part (14) of the flux conduction means and the second part (16) of the flux conduction means are of substantially identical design.

4. An electric motor or generator according to any one of claims 1 to 3,
characterized in that the first and second rotor pole areas (24, 24') - measured in axial direction - are wider than the excitation means (10).

5. An electric motor or generator according to any one of claims 1 to 4,
characterized in that in each of the first part (14) and the second part (16) of the flux conduction means, the flux conduction cross-sectional area from the circumference of the excitation means (10) to a rotor pole area (24, 24') is constant at least roughly approximately.

6. An electric motor or generator according to any one of claims 1 to 5,
characterized in that in the first part (14) and the second part (16) of the flux conduction means, the portions adjacent the rotor pole areas (24, 24') each have dimensions in circumferential direction which decrease from the outside towards the inside and have increased dimensions in axial direction in comparison with the particular rotor pole area (24, 24').

7. An electric motor or generator according to any one of claims 1 to 6,
characterized in that the rotor pole areas (24, 24') - measured in circumferential direction - each have substantially the same dimensions as the magnetic flux transition areas (36) of the stator (30).

8. An electric motor or generator according to any one of claims 1 to 7,
characterized in that the rotor (8) is subdivided in a plurality of partial rotors each having a permanent-magnetic excitation means and a two-part flux conduction means.

9. An electric motor or generator according to any one of claims 1 to 8,
characterized in that the flux conducting constituent part of the stator (30) consists of plastics-bonded iron powder material.

10. An electric motor or generator according to any one of claims 1 to 9,
characterized in that the first part (14) of the flux conduction means and/or the second part (16) of the flux conduction means and/or the flux conducting constituent part of the stators (30) each are integral constituent parts.

11. An electric motor or generator according to any one of claims 1 to 10,
characterized in that the excitation means (10) is composed with highly coercive permanent magnet material having a relative permeability close to that of air.

12. An electric motor or generator according to any one of claims 1 to 11,
characterized in that the stator (30) is composed with air-core coils.

13. An electric motor or generator according to any one of claims 1 to 12,
characterized by an electronic commutation means (44).

14. An electric motor or generator according to any one of claims 1 to 13,
characterized in that the number of magnetic flux transition areas (36) of the stator (30) can be divided by 3, such that the stator (30) is suited for a three-phase winding system.

15. An electric motor or generator according to any one of claims 1 to 14,
characterized in that the number of the rotor pole areas (24, 24') is different from the number of the magnetic flux transition areas (36) of the stator (30).

16. An electric motor or generator according to any one of claims 1 to 15,
characterized in that the coils (34) of the stator are individual coils connected to the current supply individually or connected in groups or all in commonly connected manner.

17. An electric motor or generator according to any one of claims 1 to 16,
characterized in that wound and unwound stator poles alternate in circumferential direction on the stator (30).

18. An electric motor or generator according to any one of claims 1 to 17,
characterized in that the rotor (8) is composed in accordance with the flux concentration principle, in which a particular rotor pole area (24, 24') is smaller than its related part of the transition area (20) between the excitation means (10) and the flux conduction means (12).

19. An electric motor or generator according to any one of claims 1 to 18,
characterized in that the excitation means (10) and the flux conduction means (12) are mounted on a central, magnetically non-conductive bush (46) or shaft (6).

## Revendications

1. Moteur électrique (2) rotatif ou générateur avec excitation magnétique permanente, présentant les caractéristiques suivantes :
(a) un stator (30) avec bobines (34) ;
(b) un rotor (8) avec un dispositif d'excitation magnétique permanent et un dispositif de guidage de flux (12) se raccordant au dispositif d'excitation ;
(c) le dispositif d'excitation (12) a une configuration sensiblement en forme de disque avec direction de magnétisation permanente axiale ;
(d) le dispositif de guidage de flux comporte une première partie (14), qui se raccorde au dispositif d'excitation (10) en forme de disque sur le premier côté axial et forme, sur sa périphérie tournée vers le stator (30), une série de premières surfaces de pôle de rotor (24), espacées périphériquement, ainsi qu'une deuxième partie (16), qui se raccorde sur le deuxième côté axial opposé du dispositif d'excitation (10) en forme de disque et forme, sur sa périphérie tournée vers le stator (30), une série de deuxièmes surfaces de pale de rotor (24'), espacées périphériquement ;
(e) dans lequel le long de la périphérie, tournée vers le stator, du rotor (8), alternent des premières surfaces de pôle de rotor (24) et des deuxièmes surfaces de pôle de rotor (24') ;
(f) et une fente d'air (38) sensiblement cylindrique entre les surfaces de transfert de flux magnétique (36) du stator (30) et des surfaces de pôle (24) du dispositif de guidage de flux (12) du rotor (8),
caractérisé
(g) en ce que la première partie (4) et la deuxième partie (16) du dispositif de guidage de flux
(g1) sont en matériau de poudre de fer lié avec une matière plastique
(g2) et dans la zone de diamètre, correspondant au dispositif d'excitation (10), ont chacune une épaisseur axiale augmentant quand augmente le diamètre.

2. Moteur électrique ou générateur selon la revendication 1,
caractérisé en ce que la première partie (14) et la deuxième partie (16) du dispositif de guidage de flux engrènent l'une dans l'autre en peigne dans la zone des premières et des deuxièmes surfaces de pôle de rotor (24, 24').

3. Moteur électrique ou générateur selon la revendication 1 ou 2,
caractérisé en ce que la première partie (14) du dispositif de guidage de flux et la deuxième partie (16) du dispositif de guidage de flux sont sensiblement identiques.

4. Moteur électrique ou générateur selon l'une des revendications 1 à 3,
caractérisé en ce que les premières et les deuxièmes surfaces de pôle de rotor (24, 24') - mesurées dans la direction axiale - sont plus larges que le dispositif d'excitation (10).

5. Moteur électrique ou générateur selon l'une des revendications 1 à 4,
caractérisé en ce que dans la première partie (14) et la deuxième partie (16) du dispositif de guidage de flux, la section transversale de guidage de flux est au moins grossièrement approximativement constante, depuis la périphérie du dispositif d'excitation (10) jusqu'à une surface de pôle de rotor (24, 24').

6. Moteur électrique ou générateur selon l'une des revendications 1 à 5,
caractérisé en ce que dans la première partie (14) et la deuxième partie (16) du dispositif de guidage de flux, les zones voisines des surfaces de pôle de rotor (24, 24') ont une dimension diminuant de l'extérieur vers l'intérieur dans la direction périphérique et, par comparaison à la surface de pôle de rotor (24, 24') concernée, une plus grande dimension dans la direction axiale.

7. Moteur électrique ou générateur selon l'une des revendications 1 à 6,
caractérisé en ce que les surfaces de pôle de rotor (24, 24') - mesurées dans la direction périphérique - ont chacune sensiblement la même dimension que les surfaces de transfert de flux magnétique (36) du stator (30).

8. Moteur électrique ou générateur selon l'une des revendications 1 à 7,
caractérisé en ce que le rotor (8) est partagé en plusieurs rotors partiels avec chacun un dispositif d'excitation magnétique permanent et un dispositif de guidage de flux en deux parties.

9. Moteur électrique ou générateur selon l'une des revendications 1 à 8,
caractérisé en ce que la partie constitutive du stator (30), guidant le flux, est en matériau de poudre de fer lié avec une matière plastique.

10. Moteur électrique ou générateur selon l'une des revendications 1 à 9,
caractérisé en ce que la première partie (14) du dispositif de guidage de flux et/ou la deuxième partie (16) du dispositif de guidage de flux et/ou la partie constitutive guidant le flux du stator (30) sont chacune des parties constitutives d'une seule pièce.

11. Moteur électrique ou générateur selon l'une des revendications 1 à 10,
caractérisé en ce que le dispositif d'excitation (10) est constitué d'un matériau magnétique permanent hautement coercitif, qui présente une perméabilité relative voisine de celle de l'air.

12. Moteur électrique ou générateur selon l'une des revendications 1 à 11,
caractérisé en ce que le stator (30) est constitué de bobines sans fer.

13. Moteur électrique ou générateur selon l'une des revendications 1 à 12,
caractérisé par un dispositif de commutation électronique (44).

14. Moteur électrique ou générateur selon l'une des revendications 1 à 13,
caractérisé en ce que le nombre de surfaces de transfert de flux magnétique (36) du stator (30) est divisible par 3, de sorte que le stator (30) convient à l'enroulement triphasé.

15. Moteur électrique ou générateur selon l'une des revendications 1 à 14,
caractérisé en ce que le nombre des surfaces de pôle de rotor (24, 24') est différent du nombre de surfaces de transfert de flux magnétique (36) du stator (30).

16. Moteur électrique ou générateur selon l'une des revendications 1 à 15,
caractérisé en ce que les bobines (34) du stator sont des bobines individuelles, qui sont montées individuellement ou en groupe ou qui toutes montées ensemble, sont raccordées à l'alimentation électrique.

17. Moteur électrique ou générateur selon l'une des revendications 1 à 16,
caractérisé en ce que sur le stator (30) alternent dans la direction périphérique des pôles de stator bobinés et des pôles de stator non bobinés.

18. Moteur électrique ou générateur selon l'une des revendications 1 à 17,
caractérisé en ce que le rotor (8) est constitué d'après le principe de concentration du flux, pour lequel une surface de pôle de rotor (24, 24') considérée est inférieure à la part lui revenant de la surface de transition (20) entre le dispositif d'excitation (10) et le dispositif de guidage de flux (12).

19. Moteur électrique ou générateur selon l'une des revendications 1 à 18,
caractérisé en ce que le dispositif d'excitation (10) et le dispositif de guidage de flux (12) sont fixés sur une douille (46) centrale, non conductrice magnétiquement ou sur un arbre (6).
